# EUROPÄISCHE PATENTSCHRIFT

(11) **EP 0 522 381 B1**
(45) Veröffentlichungstag und Bekanntmachung des Hinweises auf die Patenterteilung: **01.05.1996**
(21) Anmeldenummer: 92110893.2
(22) Anmeldetag: 26.06.1992
(51) Int. Cl.: B60K 37/02

(54) **Instrumententräger für Kraftfahrzeuge**
Instrument-carrier for motor vehicles
Support pour indicateurs pour véhicules à moteur

(30) Priorität: 06.07.1991 DE 9108368 U
(43) Veröffentlichungstag der Anmeldung: 13.01.1993
(73) Patentinhaber: VDO Adolf Schindling AG, D-60326 Frankfurt/Main (DE)
(72) Erfinder: Bartholomäi, Gunther, W-7730 Villingen-Schwenningen (DE); Joggerst, Sigmund, W-7730 Villingen-Schwenningen (DE)

(56) Entgegenhaltungen:
- EP-A- 0 053 738
- FR-A- 2 058 612
- FR-A- 2 383 038

## Beschreibung

Die Erfindung betrifft einen Instrumententräger für Kraftfahrzeuge, welcher für die wahlweise Aufnahme eines Fahrtschreibers mit einem quaderförmigen oder einem zylindrischen Gehäuse ausgebildet ist, wobei die Breite des quaderförmigen Fahrtschreibers größer ist als der Einbaudurchmesser des zylindrischen Fahrtschreibers.

Fahrtschreiber, die als funktionsfertige Geräte gehandelt und in fahrzeugfesten Armaturenbrettern oder Instrumentenkonsolen, aber auch in nicht fahrzeugspezifischen Instrumententrägern eingebaut werden, weisen im Gegensatz zu Fahrtschreibersystemen mit räumlich verteilten Meß-, Anzeige- und Registrieraggregaten ein mit möglichst einfachen Mitteln montierbares, zylindrisches oder quaderförmiges Einbaugehäuse auf.

Bei dem herkömmlichen Fahrtschreiberkonzept sind bekanntlich die als Aufzeichnungsträger dienenden Diagrammscheiben einem aufklappbaren Deckel zugeordnet, und zwar derart, daß eine eingelegte Diagrammscheibe in allen Einbausituationen des Fahrtschreibers bei geöffnetem Deckel dem Betrachter zugewandt ist, d. h. in dem Deckel ist außer dem bei Fahrtschreibern üblichen Anzeigemitteln ein Laufwerk für den uhrzeitrichtigen Antrieb der Diagrammscheiben angeordnet. Dieses Konzept gewährleistet ein relativ problemloses Handhaben beim Wechseln der Diagrammscheiben oder bei stichprobenweisem Kontrollieren der Aufzeichnungen. Es hat aber den Nachteil, daß für das Aufschwenken des Deckels und Handhaben der Diagrammscheiben Raum erforderlich ist, der insbesondere in der bevorzugten Einbausituation des Fahrtschreibers, nämlich im Blickfeld des Fahrers und somit im Bereich des Lenkrades, nicht in jedem Falle gegeben ist.

Ein anderes Fahrtschreiberkonzept, für welches zweckmäßigerweise ein quaderförmiges Einbaugehäuse verwendet wird, vermeidet den für das Aufschwenken eines Deckels erforderlichen Raumbedarf, indem die Eingabe und Entnahme der Diagrammscheiben - auch blatt- oder kartenförmige Aufzeichnungsträger sind anwendbar - durch mindestens einen an der Frontwand des Fahrtschreibers neben den üblichen Anzeigemitteln vorgesehenen Schlitz erfolgt. Ein derartiger Fahrtschreiber beinhaltet Führungsmittel und eine Transportvorrichtung, die eine durch den Schlitz eingegebene Diagrammscheibe selbsttätig in die Registrierposition in einer zur Frontwand im wesentlichen parallelen Ebene umlenken. Dadurch wird die Einbautiefe gegenüber den herkömmlichen Fahrtschreibern, die aufgrund des stockwerkartigen Aufbaus einen erheblichen Raumbedarf in Richtung der Geräteachse aufweisen, stark reduziert. Andererseits beansprucht dieses Fahrtschreiberkonzept mehr Frontfläche, und zwar einen rechteckförmigen Ausschnitt, dessen eine Dimension zumindest vom Durchmesser oder der Breite der verwendeten Aufzeichnungsträger bestimmt wird und dessen andere Dimension sich aus dem Nebeneinanderanordnen eines Skalen- und Ziffernträgers üblichen Durchmessers und Eingabe- bzw. Entnahmeschlitzen sowie diesen zugeordneten Betätigungsorganen ergibt.

Bei der Neugestaltung von Instrumentenkonsolen im Zuge der Entwicklung neuer Fahrzeuggenerationen ist es vorteilhaft, die Möglichkeit der Austauschfähigkeit der geschilderten und in erheblichem Maße voneinander verschiedenen Fahrtschreibertypen vorzusehen. Auf diese Weise lassen sich auf der einen Seite Kundenwünsche berücksichtigen, wobei bezüglich Fahrtschreiber die Handhabung der Aufzeichnungsträger dominiert und der eine oder andere Kunde durchaus auch die herkömmliche, relativ umständlche Einlegeprozedur bevorzugt, insbesondere um eine Umgewöhnung und somit die Gefahr, daß das Einlegen von Diagrammscheiben vergessen wird, zu vermeiden. Auf der anderen Seite ist die Möglichkeit zur späteren Umrüstung oder eine größere Flexibilität beim Einbau eines Ersatzgerätes im Falle nicht sofort durchführbarer Wartungsarbeiten bzw. zeitlich aufwendiger Reparaturen gegeben.

Die sich stellende Aufgabe besteht somit darin, einen Instrumententräger zu schaffen, in welchem mit einem möglichst geringen Adaptionsaufwand wahlweise ein Fahrtschreiber mit einem quaderförmigen Gehäuse oder ein Fahrtschreiber mit einem zylindrischen Gehäuse aufgenommen werden kann.

Die Lösung dieser Aufgabe sieht vor, daß an dem Instrumententräger eine den Abmessungen des quaderförmigen Fahrtschreibers entsprechende Fassung mit nach innen weisenden Anschlag- und Befestigungskonsolen ausgebildet ist, daß ein wenigstens der Breite der Fassung entsprechender Halter vorgesehen ist, daß in dem Halter eine dem Einbaudurchmesser des zylindrischen Fahrtschreibers entsprechende Öffnung ausgeformt ist und daß bei Verwendung eines zylindrischen Fahrtschreibers eine Blende vorgesehen ist, mit welcher ein durch den Fahrtschreiber nicht überdeckter Bereich der Fassung nach außen abdeckbar ist.

Ein erstes Ausführungsbeispiel ist dadurch gekennzeichnet, daß der Halter als ein anstelle des quaderförmigen Fahrtschreibers in der Fassung befestigbares Teil ausgebildet ist, dessen Höhe im wesentlichen der Differenz der Maße zwischen der Anschlag- und Befestigungsebene und einer im wesentlichen für beide Fahrtschreiber gleichen Skalen- und Ziffernebene entspricht.

Ein weiteres Ausführungsbeispiel zeichnet sich dadurch aus, daß als Halter eine innerhalb der Fassung nicht ausbrechbar angeformte Zwischenwand mit einer der Aufnahme des zylindrischen Fahrtschreibers dienenden Öffnung dient, daß der Zwischenwand eine Freisparung für den Durchtritt des Schachtansatzes des quaderförmigen Fahrtschreibers zugeordnet ist und daß die Fahrtschreiber von entgegengesetzten Seiten an dem Instrumententräger befestigbar sind.

Der besondere Vorteil der erfindungsgemäßen Lösung ist darin zu sehen, daß beim Ersatz des einen durch den anderen Fahrtschreibertyp trotz der sehr unterschiedlichen Gehäusearchitekturen ein und derselbe Instrumententräger verwendbar ist, insbesondere aber auch die übrige Instrumentierung des Instrumententrägers unverändert erhalten bleiben kann. Die für die Austauschfähigkeit zusätzlich erforderlichen Bauteile, der lose Halter und eine spezielle Blende oder ausschließlich eine Blende, sind mit geringem Aufwand herstellbare Bauteile, die einem herkömmlichen, zylindrischen Fahrtschreiber bereits bei dessen Verkauf als lose Teile beigefügt werden können.

Im folgenden sei die Erfindung anhand der beigefügten Zeichnungen näher erläutert. Es zeigen
Fig. 1 ein Einbaubeispiel des erfindungsgemäßen Instrumententrägers in einem Fahrzeug,
Fig. 2 eine Draufsicht eines ersten Ausführungsbeispiels des Instrumententrägers,
Fig. 3 eine Schnittdarstellung des Instrumententrägers und eine Seitenansicht eines dem Instrumententräger zugeordneten, quaderförmigen Fahrtschreibers,
Fig. 4 eine Schnittdarstellung des Instrumententrägers und eine Seitenansicht eines dem Instrumententräger zugeordneten, zylindrischen Fahrtschreibers,
Fig. 5 eine Draufsicht eines zweiten Ausführungsbeispiels des Instrumententrägers,
Fig. 6 eine Schnittdarstellung des Instrumententrägers gemäß Fig. 5 mit einer Seitenansicht eines in den Instrumententräger eingesetzten, quaderförmigen Fahrtschreibers und einer Andeutung der wahlweisen Montage eines zylindrischen Fahrtschreibers,
Fig. 7 und 8 Draufsichten gemäß den Fig. 3 und 4 und
Fig. 9 und 10 Draufsichten auf mit Geräten bestückte Instrumententräger, die für den hochformatigen Einbau des quaderförmigen Fahrtschreibers ausgebildet sind.

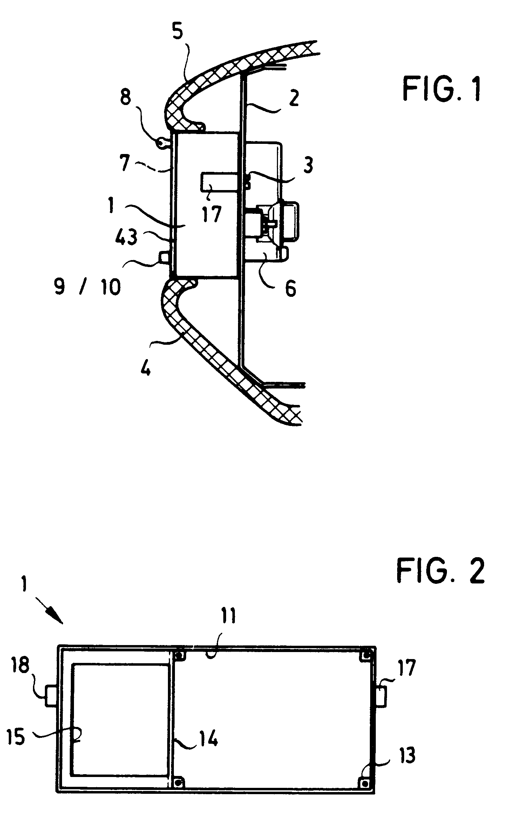

Wie das Einbaubeispiel Fig. 1 zeigt, ist der Instrumententräger 1 an einer das Armaturenbrett des betreffenden Kraftfahrzeuges bildenden Blechwand 2 beispielsweise durch Schrauben 3 befestigt und in eine geeignete Polsterung 4, 5 eingebettet. Mit 6 ist ein Fahrtschreiber mit einem zylindrischen Gehäuse bezeichnet, der durch eine Öffnung in der Blechwand 2 durchgreift, jedoch innerhalb des Instrumententrägers 1 befestigt ist. Frontseitig ist der Fahrtschreiber 6 durch eine auch den Rand des Instrumententrägers 1 übergreifende, rechteckförmige Blende bzw. Frontplatte 7 abgeschlossen. Die rechteckförmige Frontplatte 7 gestattet ein Anpassen des Fahrtschreibers 6 an den Gestaltungstrend von Instrumentenkonsolen bzw. Armaturenbrettern insbesondere von Nutzfahrzeugen, der darin besteht, mittels rechteckförmiger Felder eine gegenseitige optische Abgrenzung einzelner Instrumente und Bedienorgangruppen vorzunehmen. Dabei ist in üblicher Weise die dem zylindrischen Fahrtschreiber 6 zugeordnete Frontplatte 7 aufgrund des nach vorn aufklappbaren Deckels zweiteilig ausgebildet. Mit 8 ist ein dem Deckelschloß zugeordneter Schlüssel bezeichnet. Drehknöpfe 9 und 10 dienen bekanntlich dem Einstellen der verschiedenen Arbeitszeitarten, wie Lenkzeit, Bereitschaftszeit oder Pause.

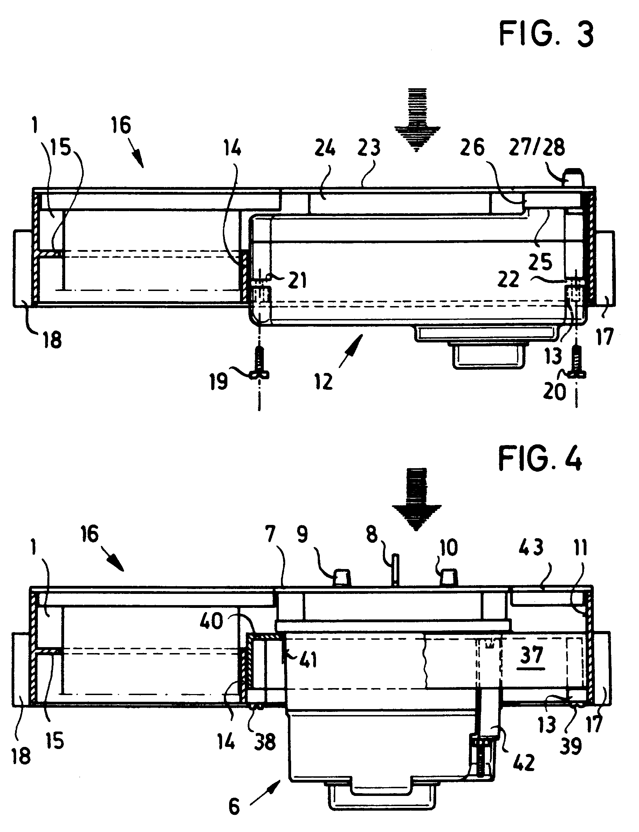

Die Fig. 2 zeigt, daß der Instrumententräger 1 im wesentlichen rahmenförmig ausgebildet ist und eine Fassung 11 mit den Maßen des für den Einbau vorgesehenen, quaderförmigen Fahrtschreibers 12 (Fig. 3) aufweist. Mit 13 ist eine von mehreren Anschlag- und Befestigungskonsolen bezeichnet. Eine Zwischenwand 14 und ein an den Außenwänden angeformter Steg 15 dienen einem dem einzubauenden Fahrtschreiber 6 bzw. 12 nebengeordneten Instrument, beispielsweise einem Drehzahlmesser 16, wenigstens als seitliche Führung. Weitgehend schematisch dargestellte Vorsprünge 17 und 18, die auch anders angeordnet bzw. von denen auch mehr als zwei ausgebildet sein können, sind für die Befestigung des Instrumententrägers 1 vorgesehen. Auch ist es denkbar, den Instrumententräger mittels Scharnieren zu befestigen, d. h. verschwenkbar anzuordnen.

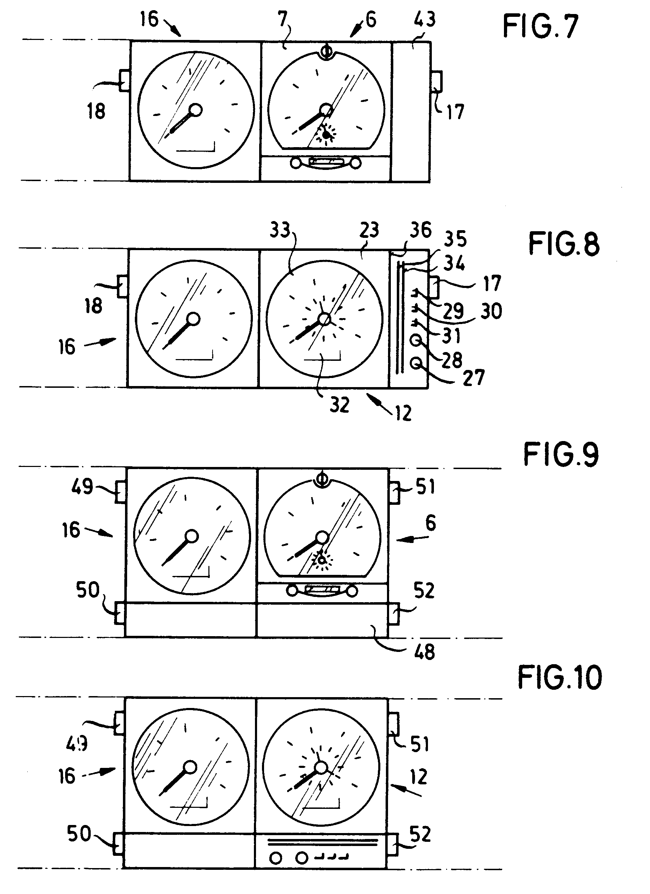

Wie aus Fig. 3 hervorgeht, liegt der in Pfeilrichtung eingesetzte, quaderförmige Fahrtschreiber 12 auf den Anschlag- und Befestigungskonsolen 13 auf und wird mittels Schrauben, von denen zwei mit 19 und 20 bezeichnet sind, an dem Instrumententräger 1 befestigt. Die Auflage erfolgt an Ohren - zwei sind mit 21 und 22 bezeichnet - die durch Freisparen der Ecken der Seitenwände des Fahrtschreibers 12 derart gebildet sind, daß sie sich noch innerhalb des Einbauquerschnitts befinden. Eine dem Fahrtschreiber 12 zugeordnete Frontplatte 23 kann bei diesem Ausführungsbeispiel bereits vor dem Einbau des Gerätes angebracht werden. Dabei dienen ein angeformter Ring 24 sowie dem zum frontseitigen Eingeben und Entnehmen von Diagrammscheiben vorgesehenen Schachtansatz 25 beidseitig übergreifende Lappen 26 dem Befestigen und Ausrichten der Frontplatte 23 auf dem Fahrtschreiber 12. Wie beim herkömmlichen Fahrtschreibertyp 6 sind auch bei diesem Gerät, wie insbesondere aus Fig. 8 ersichtlich ist, zwei Einstellknöpfe 27 und 28 für die Wahl der Arbeitszeitart und darüber hinaus Tasten 29 und 30 für das Auslösen des Einzugs und der Ausgabe der verwendeten Diagrammscheiben sowie eine Taste 31 zum Abfragen von Meßwerten beispielsweise der gefahrenen Strecke oder des Kraftstoffverbrauchs und Anzeigen der Meßwerte vorgesehen. Die Anzeige erfolgt auf einem Display 32, welches der üblichen und somit nicht näher zu erläuternden Analoganzeige des Fahrtschreibers 12 zugeordnet ist. Ein an der Frontplatte 23 befestigtes Deckglas 33 dient den Anzeigemitteln als Staub- und Berührungsschutz. Der Vollständigkeit halber sei erwähnt, daß in Fig. 8 die frontseitig zugänglichen Eingabe-/Entnahmeschlitze mit 34 und 35 bezeichnet sind und die mit 36 bezeichnete Linie oder Kerbe der optischen Bildung gleichbegrenzter Instrumentenfelder dient. Auch sei mit den strichpunktierten Linien angedeutet, daß in einem entsprechend verlängerten Instrumententräger weitere Instrumente oder Gruppen von Betätigungsorganen gegebenenfalls zwischen den Fahrtschreibern 6 oder 12 und dem Drehzahlmesser 16 vorzugsweise im Frontplattenraster angeordnet werden können. Erwähnt sei ferner, daß die Frontplatten gewölbt geformt sein können und somit Elemente eines gewölbten Armaturenbretts bilden.

Die Fig. 4 zeigt den Instrumententräger 1 ebenfalls wie Fig. 3 im Schnitt. Im Gegensatz zu Fig. 3 ist jedoch ein zylindrischer Fahrtschreiber 6 in dem Instrumententräger 1 in Pfeilrichtung eingesetzt. Zur Aufnahme des Fahrtschreibers 6 dient ein in die Fassung 11 einsetzbarer Halter 37, der auf den Anschlag- und Befestigungskonsolen 13 aufsitzt und mittels Schrauben, von denen zwei 38 und 39 dargestellt sind, am Instrumententräger 1 befestigt ist. Der Halter 37 weist einen Boden 40 auf, in welchem eine dem Einbaudurchmesser des Fahrtschreibers 6 entsprechende Öffnung 41 ausgebildet ist. Die Befestigung des Fahrtschreibers 6 an dem Halter 37 erfolgt am Boden 40 des Halters 37, und zwar in der üblichen Weise mittels zweier Spannklauen, von denen in Fig. 4 eine dargestellt und mit 42 bezeichnet ist. Der von der dem Fahrtschreiber 6 zugeordneten Frontplatte 7 nicht überdeckte Bereich der Fassung 11 ist mittels einer Blende 43 abgedeckt. Im übrigen können die Spannklauen unmittelbar an dem Halter 37 angeformt sein, so daß sie nicht wie bisher als zusätzliche lose Teile gehandhabt werden müssen.

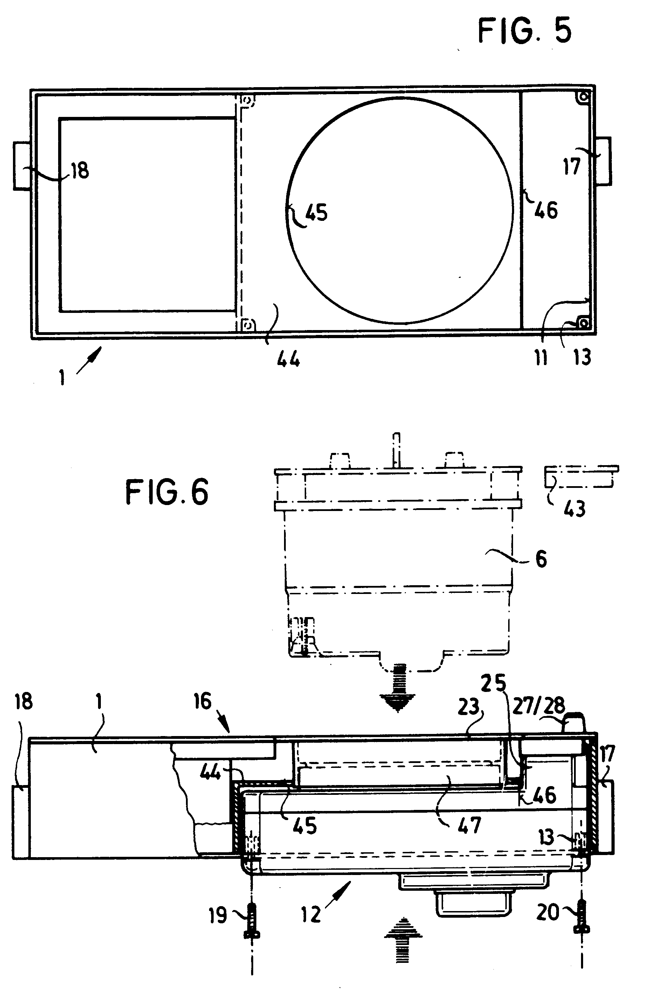

In Fig. 5 ist die Draufsicht eines weiteren Ausführungsbeispiels des Instrumententrägers 1 dargestellt, wobei der Halter für den zylindrischen Fahrtschreiber 6, der im übrigen auch austrennbar oder ausbrechbar im Instrumententräger 1 angeformt sein kann, mit dem Instrumententräger 1 nicht trennbar verbunden ist. Der innerhalb des Instrumententrägers 1 als Zwischenwand ausgebildete Halter 44 ist ebenfalls mit einer für den Einbau des zylindrischen Fahrtschreibers 6 vorgesehenen Öffnung 45 versehen. Auch in diesem Falle ist es möglich, die für das axiale Festhalten eines Fahrtschreibers erforderlichen Spannklauen unmittelbar an der Zwischenwand auszuformen, jedoch derart, daß sie, falls ein quaderförmiger Fahrtschreiber 12 eingebaut werden soll, ausgebrochen werden können. Eine Freisparung 46 dient dem Durchgreifen des Schachtansatzes 25 des quaderförmigen Fahrtschreibers 12, der bei diesem Ausführungsbeispiel ohne Frontplatte 23 von der Rückseite aus in den Instrumententräger 1 eingesetzt wird. Die Frontplatte 23 wird, wenn der Fahrtschreiber 12 im Instrumententräger 1 befestigt ist, von der Frontseite her aufgesetzt. An dieser Stelle sei erwähnt, daß die in dem Halter 44 vorgesehene Öffnung 45 und die im Halter 37 befindliche Öffnung 41 gleichen Durchmesser aufweisen, d. h. dem Einbaudurchmesser des Fahrtschreibers 6 entsprechen. Dieser Einbaudurchmesser ist andererseits größer als der Skalendurchmesser der beiden Fahrtschreiber 6 und 12, so daß ein am quaderförmigen Fahrtschreiber 12 vorgesehener zylindrischer Ansatz 47, welcher frontseitig mit dem nicht dargestellten Skalenträger dieses Fahrtschreibers abschließt und an welchem die Frontplatte 23 gehaltert ist, mit für das Anbringen der Frontplatte 23 ausreichendem, radialem Abstand von der Rückseite her durch die Öffnung 45 hindurchgreifen kann. Ferner soll darauf hingewiesen werden, daß es für die erfindungsgemäße Lösung eine Bedingung darstellt, daß der Einbaudurchmesser des zylindrischen Fahrtschreibers 6 kleiner ist als die Breite des quaderförmigen Fahrtschreibers 12. Diese Bedingung ist bei den gegebenen Fahrtschreibertypen deshalb zwangsweise erfüllt, weil unter Voraussetzung gleicher Diagrammscheibendurchmesser die Diagrammscheiben, die im herkömmlichen, zylindrischen Fahrtschreiber 6 verwendet werden, auf dem im aufklappbaren Deckel dieses Fahrtschreibers befindlichen Zentrier- und Mitnahmedorn von Hand festgespannt werden und somit keine zusätzlichen, seitlichen Führungsmittel benötigen. Im Gegensatz hierzu können bei dem quaderförmigen Fahrtschreiber 12 die zwischen den Eingabe-/Entnahmeschlitzen und der Registrierposition selbsttätig transportierbaren Diagrammscheiben nicht durch eine Gehäusewand geführt sein. Vielmehr ist ein als Baugruppe in ein Gehäuse einsetzbares Transport- und Registrieraggregat vorzusehen, in welchem seitliche Führungsmittel für die Diagrammscheiben ausgebildet sind. Dieses Aggregat erfordert seinerseits ein Gehäuse mit ausreichendem Einbaumaß und gegebenenfalls Leerraum für mechanische und elektrische Verbindungsmittel quer zur Registrierebene bzw. zur Transportbahn, so daß der quaderförmige Fahrtschreiber zwangsweise breiter ist als der Einbaudurchmesser des herkömmlichen Fahrtschreibers.

Mit den Fig. 9 und 10 ist eine nicht näher bezeichnete Ausführungsvariante des Instrumententrägers dargestellt, die einen sozusagen hochformatigen Einbau des quaderförmigen Fahrtschreibers 12 gestattet. Dem zylindrischen Fahrtschreiber 6 ist, wie Fig. 9 zeigt, eine Blende 48 zugeordnet; mit 49, 50, 51 und 52 sind bei diesem Ausführungsbeispiel am Instrumententräger ausgebildete Befestigungsansätze bezeichnet.

## Patentansprüche

1. Instrumententräger für Kraftfahrzeuge, welcher für die wahlweise Aufnahme eines Fahrtschreibers mit einem quaderförmigen oder einem zylindrischen Gehäuse (12 bzw. 6) ausgebildet ist, wobei die Breite des quaderförmigen Fahrtschreibers größer ist als der Einbaudurchmesser des zylindrischen Fahrtschreibers (6),
dadurch gekennzeichnet,
daß an dem Instrumententräger (1) eine den Abmessungen des quaderförmigen Fahrtschreibers (12) entsprechende Fassung (11) mit nach innen weisenden Anschlag- und Befestigungskonsolen (13) ausgebildet ist,
daß ein wenigstens der Breite der Fassung (11) entsprechender Halter (37 bzw. 44) vorgesehen ist,
daß in dem Halter (37 bzw. 44) eine dem Einbaudurchmesser des zylindrischen Fahrtschreibers (6) entsprechende Öffnung (41 bzw. 45) ausgeformt ist und
daß bei Verwendung eines zylindrischen Fahrtschreibers (6) eine Blende (43) vorgesehen ist, mit welcher ein durch den Fahrtschreiber (6) nicht überdeckter Bereich der Fassung (11) nach außen abdeckbar ist.

2. Instrumententräger nach Anspruch 1,
dadurch gekennzeichnet,
daß an dem Halter (37) Haltelaschen angeformt sind, welche den der Befestigung des zylindrischen Fahrtschreibers (6) dienenden und an dessen Rückseite angeordneten Gewindestiften zugeordnet sind.

3. Instrumententräger nach Anspruch 1,
dadurch gekennzeichnet,
daß der Halter (37) als ein anstelle des quaderförmigen Fahrtschreibers (12) in der Fassung (11) befestigbares Teil ausgebildet ist, dessen Höhe im wesentlichen der Differenz der Maße zwischen der Anschlag- und Befestigungsebene und einer im wesentlichen für beide Fahrtschreiber (6 und 12) gleichen Skalen- und Ziffernebene entspricht.

4. Instrumententräger nach Anspruch 1,
dadurch gekennzeichnet,
daß der Halter als ausbrechbare Zwischenwand innerhalb der für den quaderförmigen Fahrtschreiber (12) vorgesehenen Fassung (11) ausgeformt ist.

5. Instrumententräger nach Anspruch 1,
dadurch gekennzeichnet,
daß eine für alle Instrumente gemeinsame Abdeckung vorgesehen ist, in welcher eine gerätespezifische Öffnung für das Wechseln der Aufzeichnungsträger der Fahrtschreiber (6 und 12) freigespart und im Falle der Verwendung eines zylindrischen Fahrtschreibers (6) eine Blende (43, 48) integriert ist, welche den von dem Fahrtschreiber (6) nicht überdeckten Bereich der Fassung (11) nach außen abdeckt.

6. Instrumententräger nach Anspruch 1,
dadurch gekennzeichnet,
daß als Halter (44) eine innerhalb der Fassung (11) nicht ausbrechbar angeformte Zwischenwand mit einer der Aufnahme des zylindrischen Fahrtschreibers (6) dienenden Öffnung (45) dient,
daß der Zwischenwand eine Freisparung (46) für den Durchtritt des Schachtansatzes (25) des quaderförmigen Fahrtschreibers (12) zugeordnet ist und
daß die Fahrtschreiber (6 und 12) von entgegengesetzten Seiten an dem Instrumententräger (1) befestigbar sind.

## Claims

1. Instrument carrier for motor vehicles which is constructed to receive a tachograph having either a cuboid-shaped or alternatively a cylindrical housing (12 and 6 respectively), the width of the cuboid-shaped tachograph being greater than the installation diameter of the cylindrical tachograph (6),
characterised
in that a mounting (11) corresponding to the dimensions of the cuboid-shaped tachograph (12) and having inwardly pointing stop and fastening brackets (13) is constructed on the instrument carrier (1),
in that a holder (37 and 44 respectively) at least corresponding to the width of the mounting (11) is provided,
in that an opening (41 and 45 respectively) corresponding to the installation diameter of the cylindrical tachograph (6) is formed in the holder (37 and 44 respectively), and in that when using a cylindrical tachograph (6) a panel (43) is provided by means of which a region of the mounting (11) which is not concealed by the tachograph (6) can be covered towards the outside.

2. Instrument carrier according to Claim 1,
characterised
in that holding tongues are integrally formed on the holder (37) and are associated with the threaded pins serving to fasten the cylindrical tachograph (6) and arranged on the rear thereof.

3. Instrument carrier according to Claim 1,
characterised
in that the holder (37) is constructed as a part which can be fastened in the mounting (11) in place of the cuboid-shaped tachograph (12) and the height of which corresponds substantially to the difference of the dimensions between the stop and fastening plane and a dial plane which is substantially the same for both tachographs (6 and 12).

4. Instrument carrier according to Claim 1,
characterised
in that the holder is formed as a knock-out dividing wall inside the mounting (11) provided for the cuboid-shaped tachograph (12).

5. Instrument carrier according to Claim 1,
characterised
in that a common cover is provided for all the instruments, in which cover a device-specific opening is left for the changing of the recording media of the tachographs (6 and 12) and, when a cylindrical tachograph (6) is used, a panel (43, 48) is integrated which covers the region of the mounting (11), not concealed by the tachograph (6), towards the outside.

6. Instrument carrier according to Claim 1,
characterised
in that a dividing wall, integrally formed, such that it cannot be knocked out, inside the mounting (11) and having an opening (45) serving to receive the cylindrical tachograph (6), serves as the holder (44),
in that there is associated with the dividing wall an open area (46) for the passage of the shaft extension (25) of the cuboid-shaped tachograph (12), and
in that the tachographs (6 and 12) can be fastened to the instrument carrier (1) from opposite sides.

## Revendications

1. Support d'instrument pour des véhicules automobiles qui est réalisé pour le logement facultatif d'un enregistreur de route avec un boîtier parallélépipédique ou cylindrique (12 ou 6), la largeur du boîtier parallélépipédique (12) étant plus grande que le diamètre d'encastrement de l'enregistreur de route cylindrique (6),
caractérisé par le fait
que sur le support d'instrument (1) est formé un châssis (11) correspondant aux dimensions de l'enregistreur de route parallélépipédique (12) avec des consoles de butée et de fixation (13) dirigées vers l'intérieur,
qu'il est prévu un appui (37 ou 44) correspondant au moins à la largeur dudit châssis (11),
que dans ledit appui (37 ou 44) est pratiquée une ouverture (41 ou 45) correspondant au diamètre d'encastrement de l'enregistreur de route cylindrique (6) et
que, en cas d'utilisation d'un enregistreur de route cylindrique (6), il est prévu un cache (43) au moyen duquel il est possible de masquer vers l'extérieur la région du châssis (11) non recouverte par l'enregistreur de route (6).

2. Support d'instrument selon la revendication 1,
caractérisé par le fait
que sur l'appui (37) sont formées des pattes d'appui qui sont associées aux tiges filetées servant à la fixation de l'enregistreur de route cylindrique (6) et qui sont disposées sur la face arrière de ce dernier.

3. Support d'instrument selon la revendication 1,
caractérisé par le fait
que l'appui (37) est formé comme une pièce pouvant être fixée, à la place de l'enregistreur de route parallélépipédique 12, dans le châssis (11) et dont la hauteur correspond, pour l'essentiel, à la différence des cotes entre, d'une part, le plan de butée et de fixation et, d'autre part, un plan de cadran et de chiffres, pour l'essentiel identique pour les deux enregistreurs de route (6 et 12).

4. Support d'instrument selon la revendication 1,
caractérisé par le fait
que l'appui est formé comme paroi intermédiaire cassable à l'intérieur du châssis (11) prévu pour l'enregistreur de route parallélépipédique (12).

5. Support d'instrument selon la revendication 1,
caractérisé par le fait
qu'il est prévu un recouvrement commun pour tous les instruments dans lequel est évidée une ouverture spécifique de l'appareil pour le remplacement des supports d'enregistrement des enregistreurs de route (6 et 12) et, en cas d'utilisation d'un enregistreur de route cylindrique (6), intégré un cache (43, 48) qui recouvre vers l'extérieur la région du châssis (11) non recouverte par ledit enregistreur de route cylindrique (6).

6. Support d'instrument selon la revendication 1,
caractérisé par le fait
que c'est une paroi intermédiaire moulée de façon non cassable à l'intérieur du châssis (11) avec une ouverture (45) servant à loger l'enregistreur de route cylindrique (6) qui sert d'appui (44),
qu'à ladite paroi intermédiaire est associé un évidement (46) pour le passage de la saillie de puits (25) de l'enregistreur de route parallélépipédique (12) et
que les enregistreurs de route (6 et 12) peuvent être fixés à partir de côtés opposés sur le support d'instrument (1).
